# EUROPÄISCHE PATENTANMELDUNG

(11) **EP 4 270 141 A1**
(43) Veröffentlichungstag der Anmeldung: **01.11.2023**
(21) Anmeldenummer: 22170553.6
(22) Anmeldetag: 28.04.2022
(51) Int. Cl.: G05D 16/10, F16K 1/52

(54) **DRUCKMINDERUNGSVENTIL, WASSERSTOFFTANK UND KRAFTFAHRZEUG**

(71) Anmelder: Robert Bosch GmbH, 70442 Stuttgart (DE)
(72) Erfinder: BLANC, Régis, 69160 Tassin La Demi Lune (FR); BRUT, Romain, 69530 Orliénas (FR); JULIEN, Jean-Roch, 69960 Corbas (FR); BRUYERE, Lionel, 93404 Saint-Ouen (FR); CHATELAIN, Sebastien, 93400 Saint-Ouen (FR); AMBLARD, Alain, 93400 Saint-Ouen (FR); PICAUD, Jerome, 38230 Tignieu-Jameyzieu (FR); ALLIO, Philippe, 01390 Civrieux (FR); COMBE, Raphael, 93400 Saint-Ouen (FR)

(57) **Zusammenfassung**

Die Erfindung betrifft ein Druckminderungsventil (1) zum Reduzieren eines Drucks eines Gases von einem ersten Druck auf einen zweiten Druck. Das Druckminderungsventil (1) weist einen Druckausgleichskolben (7) mit einem in der zweiten Druckkammer (5) angeordneten sowie umfänglich gegen eine Wandung der zweiten Druckkammer (5) abgedichteten Druckstempel (8) und einem am Druckstempel (8) angeordneten, im Ventilkörper (2) zwischen der ersten Druckkammer (3) und der zweiten Druckkammer (5) geführten Druckschaft (9) auf. In dem Druckausgleichskolben (7) ist ein Gaskanal (10) mit einem Kanaleinlass (11) ausgebildet, wobei eine Stirnwandung (13) des Kanaleinlasses (11) durch die translatorische Bewegung des Druckausgleichskolbens (7) gegen eine in der ersten Druckkammer (3) angeordnete Dichtungsvorrichtung (14) zum Abdichten des Kanaleinlasses (11) in eine Verschlussstellung drückbar ist. Die Dichtungsvorrichtung (14) und der Kanaleinlass (11) sind derart ausgebildet, dass in der Verschlussstellung zwischen der Stirnwandung (13) und der Dichtungsvorrichtung (14) ein spitzer Winkel (A) ausgebildet ist. Ferner betrifft die Erfindung einen Wasserstofftank (20) und ein Kraftfahrzeug (23).

## Beschreibung

Die vorliegende Erfindung betrifft ein Druckminderungsventil zum Reduzieren eines Drucks eines Gases von einem ersten Druck auf einen zweiten Druck. Ferner betrifft die Erfindung einen Wasserstofftank mit einem gattungsgemäßen Druckminderungsventil sowie ein Kraftfahrzeug mit einem gattungsgemäßen Wasserstofftank.

### Stand der Technik

Es sind unterschiedliche Ausführungsformen von Druckminderungsventilen, wie beispielsweise von Wasserstoff Hochdruckminderungsventilen, bekannt, die zum Reduzieren eines relativ hohen, oftmals schwankenden Eingangsdrucks auf einen relativ niedrigen, konstanten Ausgangsdruck ausgebildet sind. Hierbei wird grundsätzlich zwischen zwei Bauarten unterschieden, konventionellen Druckminderungsventilen und invertierten Druckminderungsventilen.

Konventionelle Druckminderungsventile weisen eine erste Druckkammer mit einem ersten Gaseinlass und eine zweite Druckkammer mit einem Gasauslass auf. Über einen Gaskanal ist die erste Druckkammer mit der zweiten Druckkammer fluidkommunizierend gekoppelt. In dem Gaskanal ist ein Druckschaft eines federkraftbeaufschlagten Druckausgleichskolbens geführt. An einem in der ersten Druckkammer angeordneten Schaftende des Druckkolbenschafts ist eine Dichtungsvorrichtung angeordnet, mittels welcher ein Einlassquerschnitt des Gaskanals durch translatorisches Bewegen des Druckausgleichskolbens veränderbar bzw. verschließbar ist. Ein Druckstempelbereich des Druckausgleichskolbens ist in der zweiten Druckkammer angeordnet und gegen eine Wandung der zweiten Druckkammer umlaufend abgedichtet. Somit ist durch die Federspannung und die Druckverteilung auf die erste Druckkammer und die zweite Druckkammer ein Kräftegleichgewicht herstellbar im geöffneten Zustand. Ein Nachteil dieser Ausführung ist, dass die Dichtkraft im geschlossenen Zustand vom Druck in der ersten Kammer abhängig ist und somit die Belastung der Sitzdichtung bei hohem Systemdruck hoch ist, was zum Verschleiß über Lebensdauer führt.

Bei invertierten Druckminderungsventilen ist der Gaskanal im Druckkolben ausgebildet. Der Druckkolben ist derart in die erste Druckkammer translatorisch bewegbar, dass ein Kanaleinlass gegen eine an einem Bodenbereich der ersten Druckkammer angeordnete Dichtungsvorrichtung drückbar und somit verschließbar ist. Invertierte Druckminderungsventile haben den Vorteil gegenüber konventioneller Ausführung, dass Sitzbelastung im geschlossenen Zustand unabhängig, bzw. verhältnismäßig weniger abhängig vom Druck in der ersten Kammer ist. Infolgedessen hat diese Ausführung den Nachteil, dass die Dichtheit mit kleinen Dichtkräfte und gleichzeitig großem Dichtdurchmesser zu gewährleisten ist und dass die Verteilung der Dichtkraft um den Sitzdurchmesser stark von der Güte der geometrischen Fehlern zwischen Kolbenführung und Dichtvorrichtung abhängig ist, insbesondere im Fall vom Dichtvorrichtung aus hartem Material, sodass eine ausreichende Dichtigkeit des mittels der Dichtungsvorrichtung verschlossenen Kanaleinlasses nicht immer gewährleistbar ist.

### Offenbarung der Erfindung

Ein erster Aspekt der Erfindung betrifft ein Druckminderungsventil zum Reduzieren eines Drucks eines Gases von einem ersten Druck auf einen zweiten Druck mit den Merkmalen des unabhängigen Anspruchs 1. Ein zweiter Aspekt der Erfindung betrifft einen Wasserstofftank mit den Merkmalen des nebengeordneten Anspruchs 11. Ein dritter Aspekt der Erfindung betrifft ein Kraftfahrzeug mit den Merkmalen des nebengeordneten Anspruchs 12. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Druckminderungsventil beschrieben sind, selbstverständlich auch im Zusammenhang mit dem erfindungsgemäßen Wasserstofftank sowie dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Der erste Aspekt der Erfindung betrifft ein Druckminderungsventil zum Reduzieren eines Drucks eines Gases von einem ersten Druck auf einen zweiten Druck. Das Druckminderungsventil weist einen Ventilkörper, in welchem eine erste Druckkammer mit einem Gaseinlass zum Einlassen des Gases unter dem ersten Druck und eine mit der ersten Druckkammer fluidkommunizierend gekoppelte zweite Druckkammer mit einem Gasauslass zum Auslassen des Gases unter dem zweiten Druck ausgebildet sind auf. Ferner weist das Druckminderungsventil einen im Ventilkörper translatorisch bewegbar geführten Druckausgleichskolben mit einem in der zweiten Druckkammer angeordneten sowie umfänglich gegen eine Wandung der zweiten Druckkammer abgedichteten Druckstempel und einem am Druckstempel angeordneten, im Ventilkörper zwischen der ersten Druckkammer und der zweiten Druckkammer geführten Druckschaft auf. Im Inneren des Druckausgleichskolbens ist ein Gaskanal ausgebildet, wobei der Gaskanal auf einer dem Druckstempel abgewandten Seite des Druckschafts einen Kanaleinlass zum Einlassen des Gases aus der ersten Druckkammer und auf einer dem Druckschaft abgewandten Seite des Druckstempels einen Kanalauslass zum Auslassen des Gases in die zweite Druckkammer aufweist. Eine Stirnwandung des Kanaleinlasses ist durch die translatorische Bewegung des Druckkolbens gegen eine in der ersten Druckkammer angeordnete Dichtungsvorrichtung zum Abdichten des Kanaleinlasses in eine Verschlussstellung drückbar. Zudem weist das Druckminderungsventil eine Federvorrichtung zum Wegbewegen des Kanaleinlasses von der Dichtungsvorrichtung aus der Verschlussstellung in eine Öffnungsstellung auf. Erfindungsgemäß sind die Dichtungsvorrichtung und der Kanaleinlass derart ausgebildet, dass in der Verschlussstellung zwischen der Stirnwandung und der Dichtungsvorrichtung ein spitzer Winkel ausgebildet ist.

Unter einer Verschlussstellung wird im Rahmen der Erfindung eine Stellung des Druckausgleichskolbens verstanden, in welcher der Kanaleinlass des Gaskanals gegen die Dichtungsvorrichtung gedrückt und somit verschlossen ist. Erfindungsgemäß kann der Druckausgleichskolben bei einer verformbaren, vorzugsweise elastisch verformbaren Dichtungsvorrichtung mehrere Verschlussstellungen aufweisen, bei welchen der Kanaleinlass jeweils mit einem unterschiedlich hohen Druck gegen die Dichtungsvorrichtung gedrückt ist und hierdurch unterschiedliche, vorzugsweise elastische, Verformungen der Dichtungsvorrichtung bewirkbar sind.

Unter einer Öffnungsstellung wird im Rahmen der Erfindung eine Stellung des Druckausgleichskolbens verstanden, in welcher zwischen dem Kanaleinlass und der Dichtungsvorrichtung ein Spalt ausgebildet ist, sodass Gas aus der ersten Druckkammer über den Gaskanal in die zweite Druckkammer strömen kann. Erfindungsgemäß kann der Druckausgleichskolben mehrere Öffnungsstellungen aufweisen, bei welchen der Spalt jeweils unterschiedlich groß ausgebildet ist. Der besseren Verständlichkeit halber wird im Rahmen der Erfindung lediglich eine Verschlussstellung und eine Öffnungsstellung näher beschrieben.

Über den ersten Gaseinlass ist das unter dem ersten Druck stehende Gas in die erste Druckkammer einleitbar. Der erste Gaseinlass ist vorzugsweise in einer Wandung des Ventilkörpers ausgebildet. Bei einem in der Öffnungsstellung angeordneten Druckausgleichskolben kann das Gas in den Kanaleinlass einströmen, durch den Gaskanal im Inneren des Druckausgleichskolbens weiterströmen und aus dem Kanalauslass in die zweite Druckkammer einströmen. Das Gas aus der zweiten Druckkammer weist den zweiten Druck auf und ist durch den zweiten Gasauslass aus der zweiten Druckkammer herausführbar. Ein steigender zweiter Druck bewirkt ein Bewegen des Druckausgleichskolbens in Richtung der Verschlussstellung, ein fallender zweiter Druck bewirkt ein Bewegen des Druckausgleichskolbens von der Verschlussstellung weg, sodass der Einlassquerschnitt in Abhängigkeit vom Fluidmassenstrom angepasst wird, um in beiden Fällen den zweiten Druck konstant bzw. zumindest nahezu konstant zu halten.

Ein wesentlicher Unterschied des erfindungsgemäßen Druckminderungsventils gegenüber herkömmlichen invertierten Druckminderungsventilen ist, dass zwischen der Stirnwandung des Druckschafts und der Dichtungsvorrichtung ein spitzer Winkel ausgebildet ist. Bei herkömmlichen Druckminderungsventilen ist die Stirnwandung in der Verschlussstellung flächig gegen die Dichtungsvorrichtung gedrückt. Dies kann insbesondere bei verhältnismäßig hohen ersten Drücken von über 700 bar, vorzugsweise von etwa 875 bar, zu einer unerwünschten Leckage führen. Durch den spitzen Winkel ist eine Flächenpressung zwischen dem Druckschaft und der Dichtungsvorrichtung erhöhbar, sodass die Dichtigkeit verbessert ist.

Ein erfindungsgemäßes Druckminderungsventil hat gegenüber herkömmlichen Druckminderungsventilen den Vorteil, dass mit einfachen Mitteln sowie auf eine kostengünstige Art und Weise eine sichere Dichtheit erreicht wird. Auch bei besonders hohen ersten Drücken sowie bei längerem Gebrauch ist eine sehr zuverlässige Dichtigkeit zwischen der Dichtungsvorrichtung und der Stirnwandung des Druckschafts gewährleistet. Das erfindungsgemäße Druckminderungsventil ist somit besonders wartungsarm und weist selbst bei einer starken Belastung eine besonders hohe Lebensdauer auf.

Gemäß einer bevorzugten Weiterentwicklung der Erfindung kann bei einem Druckminderungsventil vorgesehen sein, dass die Dichtungsvorrichtung eine Ausnehmung aufweist, wobei der Kanaleinlass in der Verschlussstellung innerhalb der Ausnehmung angeordnet ist. Die Ausnehmung und der Druckschaft sind vorzugsweise derart ausgebildet, dass die Stirnwandung des Druckschafts eine Innenwandung der Ausnehmung kontaktiert. Vorzugsweise ist der komplette Kanaleinlass in der Verschlussstellung innerhalb der Ausnehmung angeordnet. Dies hat den Vorteil, dass mit einfachen Mitteln sowie auf eine kostengünstige Art und Weise die Dichtigkeit des Druckminderungsventils weiter verbessert ist.

Es ist erfindungsgemäß bevorzugt, dass die Ausnehmung kalottenförmig oder kegelförmig ausgebildet ist. Eine kalottenförmige Ausnehmung weist vorzugsweise einen kontanten Radius auf. Eine kegelförmige Ausnehmung ist vorzugsweise stumpfkegelförmig ausgebildet. Alternativ kann die Ausnehmung auch als Kombination aus einer Kalottenform und einer Kegelform ausgebildet sein. Dies hat den Vorteil, dass mit einfachen Mitteln sowie auf eine kostengünstige Art und Weise die Dichtigkeit des Druckminderungsventils weniger empfindlich zur geometrischen Fehlern und somit weiter verbessert ist.

Weiter bevorzugt weist die Dichtungsvorrichtung eine umlaufende Sicke auf, wobei die Stirnwandung in der Verschlussstellung die Sicke kontaktiert. Vorzugsweise weist die Sicke einen größeren Durchmesser als die Stirnwandung auf, sodass die Stirnwandung in der Verschlussstellung einen inneren Bereich der Sicke kontaktiert und somit eine Kraft quer zur Bewegungsrichtung des Druckschafts auf die Sicke ausübt. Dies hat den Vorteil, dass mit einfachen Mitteln sowie auf eine kostengünstige Art und Weise die Dichtigkeit des Druckminderungsventils weiter verbessert ist.

In einer besonders bevorzugten Ausgestaltung der Erfindung kann bei einem Druckminderungsventil vorgesehen sein, dass die Stirnwandung des Kanaleinlasses eine Fase und/oder eine Krümmung aufweist. Unter einer Fase wird im Rahmen der Erfindung verstanden, dass die Stirnwandung ganz oder teilweise schräg zur Längserstreckung des Druckschafts ausgebildet ist. Somit kann erfindungsgemäß die gesamte Stirnwandung oder nur ein Teil der Stirnwandung als Fase ausgebildet sein. Bei einer Krümmung der Stirnwandung ist es erfindungsgemäß bevorzugt, dass ein Krümmungsradius kleiner ist als ein Krümmungsradius einer Krümmung der Dichtungsvorrichtung, sodass der spitze Winkel bereits durch die Krümmungsverhältnisse realisiert ist. Dies hat den Vorteil, dass mit einfachen Mitteln sowie auf eine kostengünstige Art und Weise die Dichtigkeit des Druckminderungsventils weiter verbessert ist.

Vorzugsweise weist die Dichtungsvorrichtung ein elastisch verformbares Material auf oder ist aus einem elastisch verformbaren Material gebildet. Die Dichtungsvorrichtung ist vorzugsweise ausgebildet, dass das elastisch verformbare Material in der Verschlussstellung durch Einwirkung des Druckschafts elastisch verformt ist. Ferner ist die Dichtungsvorrichtung vorzugsweise ausgebildet, beim Wegbewegen des Druckschafts von der Verschlussstellung in die Öffnungsstellung eine Ursprungsform wieder anzunehmen. Dies hat den Vorteil, dass mit einfachen Mitteln sowie auf eine kostengünstige Art und Weise die Dichtigkeit des Druckminderungsventils weiter verbessert ist.

Gemäß einer bevorzugten Ausführungsform der Erfindung weist die Dichtungsvorrichtung Gummi, Polyimid oder Polyurethan auf oder ist aus Gummi, Polyimid oder Polyurethan gebildet. Erfindungsgemäß kann die Dichtungsvorrichtung auch andere ähnliche Werkstoffe aufweisen. Eine derartige Dichtungsvorrichtung ist leicht herstellbar und weist besonders gute Dichteigenschaften, insbesondere bei Drücken um die 800 bar, auf. Dies hat den Vorteil, dass mit einfachen Mitteln sowie auf eine kostengünstige Art und Weise die Dichtigkeit des Druckminderungsventils weiter verbessert und der Verschleiß des Druckminderungsventils weiter reduziert ist.

Besonders bevorzugt ist die Stirnwandung von einer ersten Kante und einer zweiten Kante begrenzt, wobei in der Verschlussstellung die erste Kante die Dichtungsvorrichtung kontaktiert und die zweite Kante von der Dichtungsvorrichtung beabstandet ist. Mit anderen Worten ist bei dem erfindungsgemäßen Druckminderungsventil eine Abdichtung zwischen einem umlaufenden Teilbereich der Stirnwandung und der Dichtungsvorrichtung erzielbar, während ein anderer umlaufender Teilbereich der Stirnwandung keinen Einfluss auf die Abdichtung aufweist. Alternativ kann die Stirnwandung noch eine dritte Kante aufweisen, wobei die erste Kante vorzugsweise zwischen der zweiten Kante und der dritten Kante verläuft und die dritte Kante in der Verschlussstellung von der Dichtungsvorrichtung ebenfalls beabstandet ist. Vorzugsweise sind die Stirnwandung und die Dichtungsvorrichtung ausgebildet, dass in der Verschlussstellung eine linienförmige oder zumindest annähernd linienförmige Abdichtung bereitstellbar ist. Dies hat den Vorteil, dass mit einfachen Mitteln sowie auf eine kostengünstige Art und Weise die Dichtigkeit des Druckminderungsventils weiter verbessert ist.

Es ist erfindungsgemäß bevorzugt, dass die erste Kante aus Außenkante des Kanaleinlasses ausgebildet ist. In der Verschlussstellung ist die zweite Kante somit von dem Gaseinlass der ersten Druckkammer fluiddicht isoliert. Über die erste Kante ist die Dichtungsvorrichtung radial nach außen drückbar, sodass eine verbesserte Dichtwirkung erzielbar ist. Dies hat den Vorteil, dass mit einfachen Mitteln sowie auf eine kostengünstige Art und Weise die Dichtigkeit des Druckminderungsventils weiter verbessert und der Verschleiß des Druckminderungsventils weiter reduziert ist.

Vorzugsweise weist der Druckkolben am Kanaleinlass einen Außendurchmesser von zwischen 6 mm und 10 mm auf. Druckminderungsventile mit derartig ausgebildeten Druckkolben sind für Anwendungen in Kraftfahrzeugen besonders geeignet und weisen bei herkömmlichen Ausführungsformen eine besonders hohe Undichtigkeit auf. Dies hat den Vorteil, dass mit einfachen Mitteln sowie auf eine kostengünstige Art und Weise die Dichtigkeit des Druckminderungsventils weiter verbessert und der Verschleiß des Druckminderungsventils weiter reduziert ist.

Der zweite Aspekt der Erfindung betrifft einen Wasserstofftank. Der Wasserstofftank weist eine Tankwandung und einen von der Tankwandung fluiddicht begrenzten Tankinnenraum zur Aufnahme von Wasserstoff auf. Erfindungsgemäß ist der Tankinnenraum mit einem Druckminderungsventil nach einem der vorangegangenen Ansprüche fluidkommunizierend gekoppelt. Das Druckminderungsventil ist vorzugsweise an der Tankwandung gehalten. Vorzugsweise ist das Druckminderungsventil in einen Gasauslasskanal des Wasserstofftanks eingeschraubt oder über eine Gasleitung mit dem Tankinnenraum fluidkommunizierend gekoppelt. Das Druckminderungsventil ist vorzugsweise austauschbar an der Tankwandung gehalten.

Bei dem erfindungsgemäßen Wasserstofftank ergeben sich sämtliche Vorteile, die bereits zu einem Druckminderungsventil gemäß dem ersten Aspekt der Erfindung beschrieben worden sind. Demnach hat das erfindungsgemäße Wasserstofftank gegenüber herkömmlichen Wasserstofftanks den Vorteil, dass mit einfachen Mitteln sowie auf eine kostengünstige Art und Weise auch bei besonders hohen ersten Drücken sowie bei längerem Gebrauch eine sehr zuverlässige Dichtigkeit zwischen der Dichtungsvorrichtung und der Stirnwandung des Druckschafts gewährleistet ist. Der erfindungsgemäße Wasserstofftank ist somit besonders wartungsarm und weist selbst bei einer starken Belastung, insbesondere des Druckminderungsventils, eine besonders hohe Lebensdauer auf.

Der dritte Aspekt der Erfindung betrifft ein Kraftfahrzeug. Das Kraftfahrzeug weist ein Antriebssystem mit einer Brennstoffzelle und/oder einem Wasserstoffverbrennungsmotor auf. Erfindungsgemäß weist das Antriebssystem einen erfindungsgemäßen Wasserstofftank auf. Die Brennstoffzelle ist zum Umwandeln der chemischen Energie des Wasserstoffs in elektrische Energie ausgebildet. Bei Verwendung einer Brennstoffzelle weist das Antriebssystem vorzugsweise einen Elektromotor zum Antreiben des Kraftfahrzeugs auf. Der Wasserstoffverbrennungsmotor ist zum Umwandeln der chemischen Energie des Wasserstoffs in mechanische Energie ausgebildet. Hierfür ist der Wasserstoffverbrennungsmotor zum direkten Verbrennen des Wasserstoffs ausgebildet.

Bei dem erfindungsgemäßen Kraftfahrzeug ergeben sich sämtliche Vorteile, die bereits zu einem Druckminderungsventil gemäß dem ersten Aspekt der Erfindung sowie zu einem Wasserstofftank gemäß dem zweiten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise auch bei besonders hohen ersten Drücken sowie bei längerem Gebrauch eine sehr zuverlässige Dichtigkeit zwischen der Dichtungsvorrichtung und der Stirnwandung des Druckschafts gewährleistet ist. Das erfindungsgemäße Kraftfahrzeug ist somit besonders wartungsarm und weist selbst bei einer starken Belastung, insbesondere des Druckminderungsventils, eine besonders hohe Lebensdauer auf.

Ein erfindungsgemäßes Druckminderungsventil, ein erfindungsgemäßer Wasserstofftank sowie ein erfindungsgemäßes Kraftfahrzeug werden nachfolgend anhand von Zeichnungen näher erläutert. Es zeigen jeweils schematisch:
Figur 1 in einer Schnittdarstellung ein invertiertes Druckminderungsventil gemäß dem Stand der Technik,
Figur 2 in einer Schnittdarstellung ein Druckminderungsventil gemäß einer bevorzugten ersten Ausführungsform der Erfindung,
Figur 3 in einer Schnittdarstellung eine Detailansicht des Druckminderungsventils aus Figur 2,
Figur 4 in einer Schnittdarstellung ein Druckminderungsventil gemäß einer bevorzugten zweiten Ausführungsform der Erfindung,
Figur 5 in einer Schnittdarstellung ein Druckminderungsventil gemäß einer bevorzugten dritten Ausführungsform der Erfindung,
Figur 6 in einer Schnittdarstellung eine Detailansicht eines Druckminderungsventils gemäß einer bevorzugten vierten Ausführungsform der Erfindung,
Figur 7 in einer Schnittdarstellung eine Detailansicht eines Druckminderungsventils gemäß einer bevorzugten fünften Ausführungsform der Erfindung, und
Figur 8 in einer Seitenansicht eine bevorzugte Ausführungsform eines erfindungsgemäßen Kraftfahrzeugs.

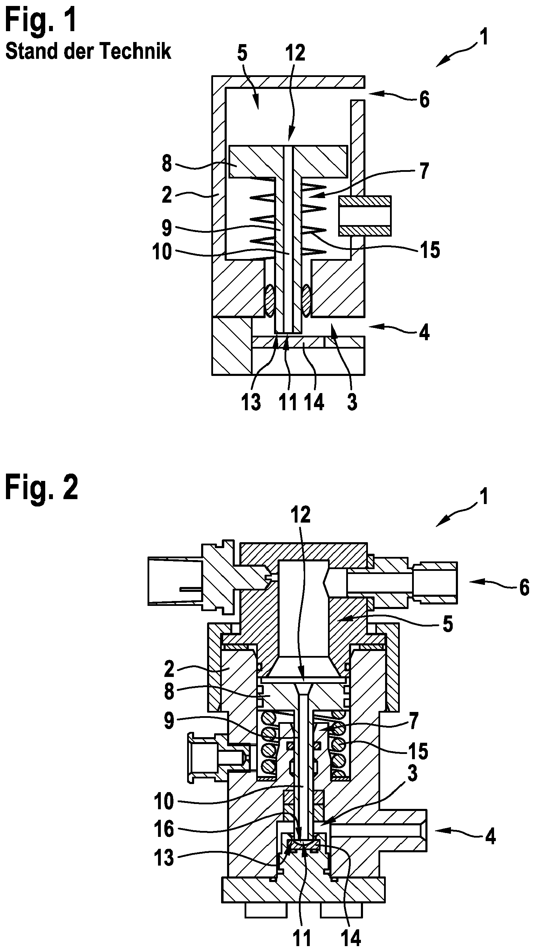

Elemente mit gleicher Funktion und Wirkungsweise sind in den Figuren 1 bis 8 jeweils mit denselben Bezugszeichen versehen.

In Fig. 1 ist ein Druckminderungsventil 1 gemäß dem Stand der Technik schematisch in einer Schnittdarstellung abgebildet. Das Druckminderungsventil 1 weist einen Ventilkörper 2 auf, durch welchen eine erste Druckkammer 3 und eine zweite Druckkammer 5 gebildet sind. Über einen Gaseinlass 4 ist Gas in die erste Druckkammer 3 einleitbar. Die erste Druckkammer 3 ist mit der zweiten Druckkammer 5 fluidkommunizierend gekoppelt. Über einen Gasauslass 6 ist das Gas aus der zweiten Druckkammer 5 auslassbar.

Im Ventilkörper 2 ist ein Druckausgleichskolben 7 linear bewegbar angeordnet. Ein Druckstempel 8 des Druckausgleichskolbens 7 ist in der zweiten Druckkammer 5 angeordnet. Ein Druckschaft 9 des Druckausgleichskolbens 7 erstreckt sich vom Druckstempel 8 in die erste Druckkammer 3. Durch den Druckausgleichskolben 7 erstreckt sich ein Gaskanal 10, welcher an einer in der ersten Druckkammer 3 angeordneten Stirnwandung 13 des Druckschafts 9 einen Kanaleinlass 11 und auf einer dem Druckschaft 9 abgewandten Seite des Druckstempels 8 einen Kanalauslass 12 aufweist.

Der Druckausgleichskolben 7 ist über eine Federvorrichtung 15 in die dargestellte Öffnungsstellung bewegbar. Durch ansteigenden Druck in der zweiten Druckkammer 5 ist der Druckausgleichskolben 7 derart in Richtung einer in der ersten Druckkammer 3 angeordneten Dichtungsvorrichtung 14 bewegbar, dass die Stirnwandung 13 flächig gegen die Dichtungsvorrichtung 14 drückt und somit der Kanaleinlass 11 verschlossen ist. Diese Position wird im Rahmen der Erfindung als Verschlussposition bezeichnet.

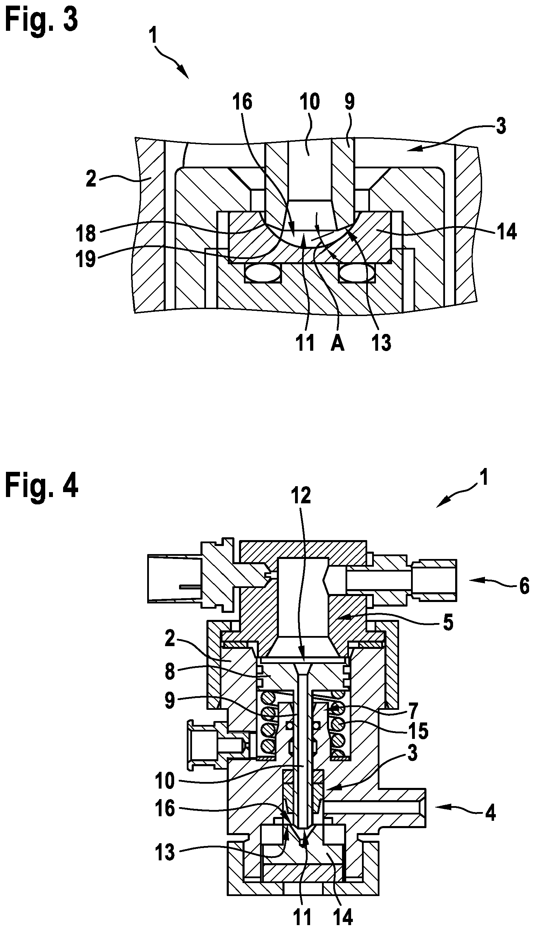

Fig. 2 zeigt ein Druckminderungsventil 1 gemäß einer bevorzugten ersten Ausführungsform der Erfindung schematisch in einer Schnittdarstellung. In Fig. 3 ist eine Detailansicht des Druckminderungsventils 1 aus Fig. 2 schematisch in einer Schnittdarstellung dargestellt. Das Druckminderungsventil 1 ist in der Verschlussstellung angeordnet. Das Druckminderungsventil 1 gemäß der bevorzugten ersten Ausführungsform der Erfindung unterscheidet sich von dem in Fig. 1 dargestellten Druckminderungsventil 1 in der Ausbildung der Stirnwandung 13 und der Dichtungsvorrichtung 14. Wie insbesondere in Fig. 3 erkennbar ist, weist die Dichtungsvorrichtung eine kalottenförmige Ausnehmung 16 auf, in welche die Stirnwandung 13 des Druckschafts 9 eingetaucht ist. Eine als Außenkante ausgebildete erste Kante 18 der Stirnwandung 13 kontaktiert die Dichtungsvorrichtung 14, sodass zwischen der Stirnwandung 13 und der Dichtungsvorrichtung 14 ein spitzer Winkel A ausgebildet ist. Eine als Innenkante ausgebildete zweite Kante 19 der Stirnwandung 13 ist von der Dichtungsvorrichtung 14 beabstandet angeordnet. Der Kanaleinlass 11 des Gaskanals 10 ist somit durch die Dichtungsvorrichtung 14 gegenüber der ersten Druckkammer 3 abgedichtet.

Fig. 4 zeigt ein Druckminderungsventil 1 gemäß einer bevorzugten zweiten Ausführungsform der Erfindung schematisch in einer Schnittdarstellung. Das Druckminderungsventil 1 ist in der Öffnungsstellung angeordnet. Das

Druckminderungsventil 1 gemäß der bevorzugten zweiten Ausführungsform der Erfindung unterscheidet sich von dem in Fig. 2 dargestellten Druckminderungsventil 1 gemäß der bevorzugten ersten Ausführungsform der Erfindung in der Ausbildung der Stirnwandung 13 und der Dichtungsvorrichtung 14. Die Ausnehmung 16 der Dichtungsvorrichtung 14 ist kegelförmig ausgebildet.

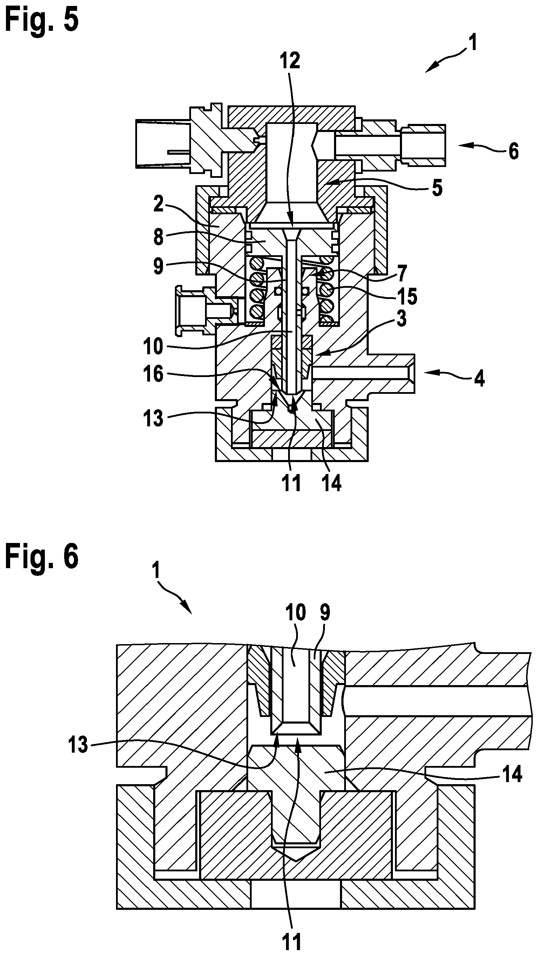

In Fig. 5 ist ein Druckminderungsventil 1 gemäß einer bevorzugten dritten Ausführungsform der Erfindung schematisch in einer Schnittdarstellung abgebildet. Das Druckminderungsventil 1 ist in der Öffnungsstellung angeordnet. Das Druckminderungsventil 1 gemäß der bevorzugten dritten Ausführungsform der Erfindung unterscheidet sich von dem in Fig. 4 dargestellten Druckminderungsventil 1 gemäß der bevorzugten zweiten Ausführungsform der Erfindung in der Ausbildung der der Dichtungsvorrichtung 14. Die Dichtungsvorrichtung 14 weist einen sockelartigen Abschnitt auf, der sich in Richtung der zweiten Druckkammer 5 erstreckt. Die Ausnehmung 16 der Dichtungsvorrichtung 14 ist in dem sockelartigen Abschnitt angeordnet und ebenfalls kegelförmig ausgebildet.

Fig. 6 zeigt eine Detailansicht eines Druckminderungsventils 1 gemäß einer bevorzugten vierten Ausführungsform der Erfindung schematisch in einer Schnittdarstellung. Das Druckminderungsventil 1 ist in der Öffnungsstellung angeordnet. Die Dichtungsvorrichtung 14 weist eine pilzförmige Ausbildung mit einer plattenförmigen dem Druckschaft 9 zugewandten Oberseite auf. Die Stirnwandung 13 weist eine umlaufende Fase auf und ist somit trichterförmig ausgebildet.

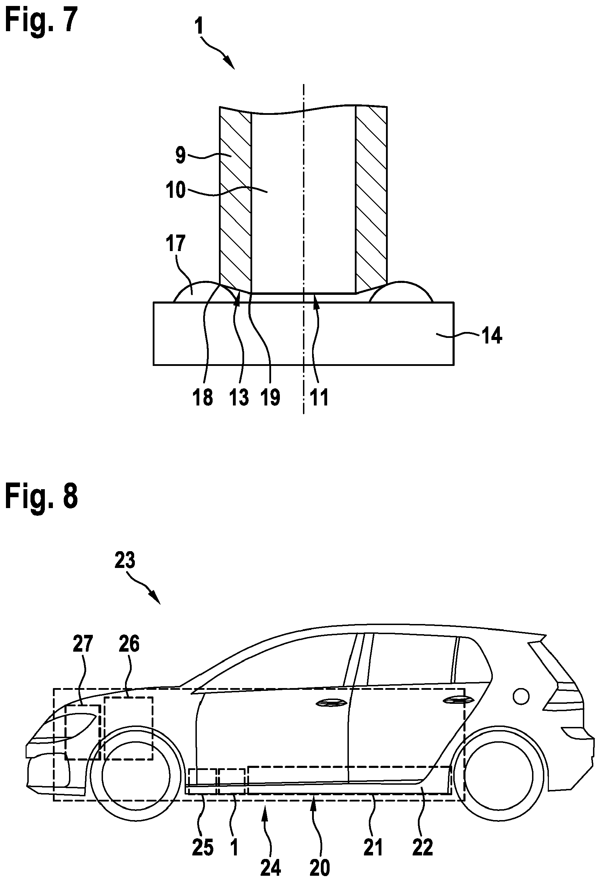

Fig. 7 zeigt eine Detailansicht eines Druckminderungsventils 1 gemäß einer bevorzugten fünften Ausführungsform der Erfindung schematisch in einer Schnittdarstellung. Das Druckminderungsventil 1 ist in der Verschlussstellung angeordnet. Die Dichtungsvorrichtung 14 weist eine umlaufende Sicke 17 auf. Die als Außenkante ausgebildete erste Kante 18 der Stirnwandung 13 kontaktiert die Sicke 17 und dichtet somit den Kanaleinlass 11 gegenüber der ersten Druckkammer 3 ab. Die als Innenkante ausgebildete zweite Kante 19 der Stirnwandung 13 weist einen Abstand zur Dichtungsvorrichtung 14 auf.

In Fig. 8 ist eine bevorzugte Ausführungsform eines erfindungsgemäßen Kraftfahrzeugs 23 schematisch in einer Seitenansicht dargestellt. Das Kraftfahrzeug 23 weist ein Antriebssystem 24 mit einem Elektromotor 26 und einem Getriebe 27 zum Antreiben des Kraftfahrzeugs 23 auf. Zum Umwandeln chemischer Energie aus Wasserstoff weist das Kraftfahrzeug 23 eine Brennstoffzelle 25 auf. Ferner weist das Antriebssystem 24 einen erfindungsgemäßen Wasserstofftank 20 mit einer Tankwandung 21 und einem durch die Tankwandung 21 abgedichteten Tankinnenraum 22 auf. Die Brennstoffzelle 25 ist über ein erfindungsgemäßes Druckminderungsventil 1 des Wasserstofftanks 20 mit dem Tankinnenraum 22 fluidkommunizierend gekoppelt.

## Patentansprüche

1. Druckminderungsventil (1) zum Reduzieren eines Drucks eines Gases von einem ersten Druck auf einen zweiten Druck, aufweisend einen Ventilkörper (2), in welchem eine erste Druckkammer (3) mit einem Gaseinlass (4) zum Einlassen des Gases unter dem ersten Druck und eine mit der ersten Druckkammer (3) fluidkommunizierend gekoppelte zweite Druckkammer (5) mit einem Gasauslass (6) zum Auslassen des Gases unter dem zweiten Druck ausgebildet sind, sowie einen im Ventilkörper (2) translatorisch bewegbar geführten Druckausgleichskolben (7) mit einem in der zweiten Druckkammer (5) angeordneten sowie umfänglich gegen eine Wandung der zweiten Druckkammer (5) abgedichteten Druckstempel (8) und einem am Druckstempel (8) angeordneten, im Ventilkörper (2) zwischen der ersten Druckkammer (3) und der zweiten Druckkammer (5) geführten Druckschaft (9), wobei im Inneren des Druckausgleichskolbens (7) ein Gaskanal (10) ausgebildet ist, wobei der Gaskanal (10) auf einer dem Druckstempel (8) abgewandten Seite des Druckschafts (9) einen Kanaleinlass (11) zum Einlassen des Gases aus der ersten Druckkammer (3) und auf einer dem Druckschaft (9) abgewandten Seite des Druckstempels (8) einen Kanalauslass (12) zum Auslassen des Gases in die zweite Druckkammer (5) aufweist, wobei eine Stirnwandung (13) des Kanaleinlasses (11) durch die translatorische Bewegung des Druckausgleichskolbens (7) gegen eine in der ersten Druckkammer (3) angeordnete Dichtungsvorrichtung (14) zum Abdichten des Kanaleinlasses (11) in eine Verschlussstellung drückbar ist, wobei das Druckminderungsventil (1) eine Federvorrichtung (15) zum Wegbewegen des Kanaleinlasses (11) von der Dichtungsvorrichtung (14) aus der Verschlussstellung in eine Öffnungsstellung aufweist,
**dadurch gekennzeichnet,**
**dass** die Dichtungsvorrichtung (14) und der Kanaleinlass (11) derart ausgebildet sind, dass in der Verschlussstellung zwischen der Stirnwandung (13) und der Dichtungsvorrichtung (14) ein spitzer Winkel (A) ausgebildet ist.

2. Druckminderungsventil (1) nach Anspruch 1,
**dadurch gekennzeichnet,**
**dass** die Dichtungsvorrichtung (14) eine Ausnehmung (16) aufweist, wobei der Kanaleinlass (11) in der Verschlussstellung innerhalb der Ausnehmung (16) angeordnet ist.

3. Druckminderungsventil (1) nach Anspruch 2,
**dadurch gekennzeichnet,**
**dass** die Ausnehmung (16) kalottenförmig oder kegelförmig ausgebildet ist.

4. Druckminderungsventil (1) nach einem der vorangegangenen Ansprüche, **dadurch gekennzeichnet,**
**dass** die Dichtungsvorrichtung (14) eine umlaufende Sicke (17) aufweist, wobei die Stirnwandung (13) in der Verschlussstellung die Sicke (17) kontaktiert.

5. Druckminderungsventil (1) nach einem der vorangegangenen Ansprüche, **dadurch gekennzeichnet,**
**dass** die Stirnwandung (13) des Kanaleinlasses (11) eine Fase und/oder eine Krümmung aufweist.

6. Druckminderungsventil (1) nach einem der vorangegangenen Ansprüche, **dadurch gekennzeichnet,**
**dass** die Dichtungsvorrichtung (14) ein elastisch verformbares Material aufweist oder aus einem elastisch verformbaren Material gebildet ist.

7. Druckminderungsventil (1) nach einem der vorangegangenen Ansprüche, **dadurch gekennzeichnet,**
**dass** die Dichtungsvorrichtung (14) Gummi, Polyimid oder Polyurethan aufweist oder aus Gummi, Polyimid oder Polyurethan gebildet ist.

8. Druckminderungsventil (1) nach einem der vorangegangenen Ansprüche, **dadurch gekennzeichnet,**
**dass** die Stirnwandung (13) von einer ersten Kante (18) und einer zweiten Kante (19) begrenzt ist, wobei in der Verschlussstellung die erste Kante (18) die Dichtungsvorrichtung (14) kontaktiert und die zweite Kante (19) von der Dichtungsvorrichtung (14) beabstandet ist.

9. Druckminderungsventil (1) nach Anspruch 7,
**dadurch gekennzeichnet,**
**dass** die erste Kante (18) aus Außenkante des Kanaleinlasses (11) ausgebildet ist.

10. Druckminderungsventil (1) nach einem der vorangegangenen Ansprüche, **dadurch gekennzeichnet,**
**dass** der Druckkolben (7) am Kanaleinlass (11) einen Außendurchmesser von zwischen 6 mm und 10 mm aufweist.

11. Wasserstofftank (20), aufweisend eine Tankwandung (21) und einen von der Tankwandung (21) fluiddicht begrenzten Tankinnenraum (22) zur Aufnahme von Wasserstoff,
**dadurch gekennzeichnet,**
**dass** der Tankinnenraum (22) mit einem Druckminderungsventil (1) nach einem der vorangegangenen Ansprüche fluidkommunizierend gekoppelt ist.

12. Kraftfahrzeug (23), aufweisend ein Antriebssystem (24) mit einer
Brennstoffzelle (25) und/oder einem Wasserstoffverbrennungsmotor, **dadurch gekennzeichnet,**
**dass** das Antriebssystem (24) einen Wasserstofftank (20) nach Anspruch 11 aufweist.
